# EUROPEAN PATENT APPLICATION

(11) **EP 2 806 375 A2**
(43) Date of publication of application: **26.11.2014**
(21) Application number: 14168059.5
(22) Date of filing: 13.05.2014
(51) Int. Cl.: G06K 9/46

(54) **Apparatus and method of document tagging by pattern matching**

(30) Priority: 22.05.2013 US 201361826415 P; 29.04.2014 US 201414265133
(71) Applicant: Synchronoss Technologies, Inc., Bridgewater, NJ 08807 (US)
(72) Inventor: Kurzanski, Jeremi, 13720 La Bouilladisse (FR)
(74) Representative: Goddar, Heinz J.

(57) **Abstract**

Embodiments of the invention relate to classification of documents. A user is able to take a snapshot of a document using a smart device. The photo of the document is matched to one or more existing templates. The one or more existing templates are locally stored on the smart device. If the document in the photo is recognized stored on pattern matching, then the photo is tagged with an existing classification. The tagged photo can be locally stored on the smart device, able to and backed up in a cloud, or both. The user is able to perform a search for a particular document stored on key words rather two visually review all photos.

## Description

### Related Applications

This application claims benefit of priority under 35 U.S.C. section 119(e) of the co-pending United States Provisional Patent Application Serial No. 61/826,415, filed May 22, 2013, entitled "Document Tagging by Pattern Matching," which is hereby incorporated by reference in its entirety.

### Field of Invention

The present invention relates to document tagging. More particularly, the present invention relates to apparatus and method of document tagging by pattern matching.

### Background of the Invention

With the prevalence of smart devices and the rise of camera quality on the smart devices, cameras on the smart devices are now being used as scanners. Users are able take snapshots of important documents such as bills. This usage is quick and simple. However, it is inconvenient when a user wants to quickly find a document because documents are seen as photos and are stored in a camera roll. In addition, the snapshots are typically unclassified. The user is not able to perform a search and thus must resort to visually reviewing the photos in the camera roll sequentially to find a particular document, for example, the December phone bill. However, this visual process can be a daunting and time-consuming task since the December phone bill can be in the middle of last year's holiday pictures.

Prior art document classification processes are based on OCR (optical character recognition) and word matching. However, these prior art document classification processes intrude on user privacy.

### Brief Summary of the Invention

Embodiments of the present invention relate to classification of documents. A user is able to take a snapshot of a document using a smart device. The photo of the document is matched to one or more existing templates. The one or more existing templates are locally stored on the smart device. If the document in the photo is recognized based on pattern matching, then the photo is tagged with an existing classification. The tagged photo can be locally stored on the smart device, uploaded to and backed up in a cloud, or both. The user is able to perform a search for a particular document based on key words rather than to visually review all photos.

In one aspect, a non-transitory computer-readable medium is provided. The non-transitory computer-readable medium stores instructions that, when executed by a computing device, cause the computing device to perform a method. The method includes performing a pattern computation on a photo to find a pattern.

In some embodiments, performing a pattern computation on a photo includes determining whether the photo includes a code. Based on the determination that the photo includes the code, performing a pattern computation also includes using the code to extract the pattern. The code can be an one-dimensional code or a two-dimensional code. For example, the code is a QR code or a barcode. Based on the determination that the photo does not include the code, performing a pattern computation also includes determining a total number of colors in the photo. Based on the determination that the amount of colors is below a color threshold, performing a pattern computation also includes determining a total number of vectors in the photo. Based on the determination that the amount of vectors is below a vector threshold, performing a pattern computation also includes using the vectors as the pattern.

In some embodiments, determining a total number of vectors includes resizing the photo, blurring the resized photo, detecting canny contours in the blurred photo, and extracting line segments from the canny contours. The line segments can be extracted by using the Hough transform.

In some embodiments, the first computation based on code identification is separate from the second computation based on color scheme detection and vector extraction. If no code is identified from the first computation, then the second computation is performed. In some embodiments, the second computation is not performed if a code is identified from the first computation.

In some embodiments, color schema detection and vector extraction complement each other. Color scheme detection is used in conjunction with vector detection to enhance pattern recognition.

The method also includes determining whether the pattern matches an existing template.

Based on the determination that a match has occurred, the method also includes tagging the photo according to the existing template.

Based on the determination that no match has occurred, the method also includes storing the pattern as a new template for future use, and tagging the photo according to the new template.

In some embodiments, prior to performing a pattern computation, the method also includes detecting the photo as a new photo on the computing device.

In some embodiments, prior to tagging the photo according to the existing template, the method also includes receiving user confirmation that the photo is to be tagged according to the existing template.

In some embodiments, the method also includes storing the tagged photo at a remote location.

In another aspect, a non-transitory computer-readable medium is provided. The non-transitory computer-readable medium stores instructions that, when executed by a computing device, cause the computing device to perform a method. The method includes creating a template of a document based on a first scan of the document, linking the template with at least one tag, comparing a subsequent scan with the template and, based on the comparison, tagging the subsequent scan with the at least one tag.

In some embodiments, the method further includes adding the template to a collection of templates stored on the computing device.

In some embodiments, the method further includes transmitting the tagged scan to a remote location to be backed up.

In some embodiments, the method further includes performing a remote search against tags by using at least one key word.

In some embodiments, the method further comprises receiving from the remote location photos in response to the remote search.

In yet another aspect, a system is provided. The system includes a network, a server coupled with the network, the server backing up user data, and an end-user device. The end-user device includes a camera, a memory and an application stored in the memory. The application is configured to detect a new snapshot taken by the camera, determine whether the snapshot is of a document and, based on the determination that the snapshot is of a document, visually identifying the snapshot for classification. The visual identification is independent of text recognition.

In some embodiments, the application is also configured to tag the snapshot based on the visual identification and to transmitted the tagged snapshot to the server. In some embodiments, the user data includes the tagged snapshot. The tag classifies the tagged snapshot that is stored by the server.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 illustrates an exemplary system according to an embodiment of the present invention.
FIG. 2 illustrates a block diagram of an exemplary computing device according to an embodiment of the present invention.
FIG. 3 illustrates an exemplary flow diagram of document tagging according to an embodiment of the present invention.
FIG. 4 illustrates an exemplary flow diagram of pattern extraction according to an embodiment of the present invention.
FIG. 5 illustrates an exemplary graphical process of a vector pattern extractor according to an embodiment of the present invention.
FIG. 6 illustrates an exemplary method of document tagging by pattern matching according to an embodiment of the present invention.
FIG. 7 illustrates an exemplary method of pattern computation according to an embodiment of the present invention.
FIG. 8 illustrates another exemplary method of document tagging by pattern matching according to an embodiment of the present invention.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention relate to classification of documents. A user is able to take a snapshot of a document using a smart device. The photo of the document is matched to one or more existing templates. The one or more existing templates are locally stored on the smart device. If the document in the photo is recognized based on pattern matching, then the photo is tagged with an existing classification. The tagged photo can be locally stored on the smart device, uploaded to and backed up in a cloud, or both. The user is able to perform a search for a particular document based on key words rather than to visually review all photos.

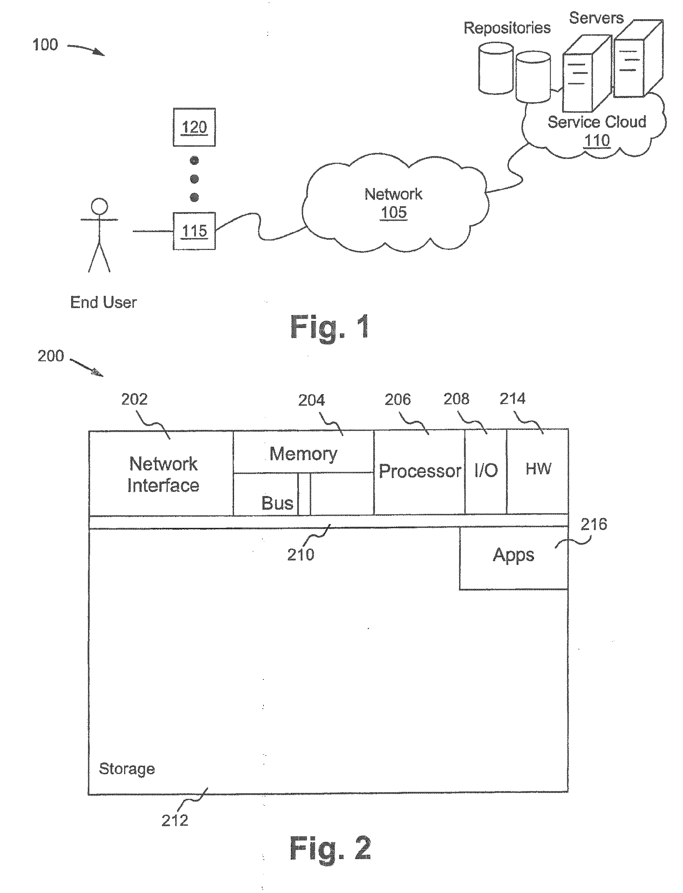

FIG. 1 illustrates an exemplary system 100 according to an embodiment of the present invention. The system 100 typically includes a network 105, such as the Internet, and a service cloud 110 that is communicatively coupled with the network 105. A server(s) in the cloud 110 is configured to provide a service to service members. In some embodiments, the service is provided by a cellular provider.

The service backs up data received from one or more end-user devices 115 that are used by the service members in one or more repositories. The one or more repositories can be located in the cloud 110, as illustrated in FIG. 1, although the repositories can be located elsewhere in the system 100. The data that is backed up can include address books, calendars, music, documents, financial files, and text messages. Other data, such as photos, can also be backed up. In some embodiments, photos of documents are tagged in the cloud 110.

Although templates are typically locally stored and managed by users, the templates can also be backed up by the server(s) in the cloud 110. The templates stored by the server can be encrypted. The templates are not used by the server. In some embodiments, the templates stored in the cloud 110 are synchronized among service members.

The system also includes at least one end-user device 115. The end-user device 115 typically belongs to a service member or subscriber of the service. Each service member typically has an account in the cloud 110. The account allows the subscriber to set his/her preferences, such as frequency of backup, notifications and information sharing settings. The account also allows the subscriber to modify tags of photos stored in the cloud 110. The subscriber is typically able to access the account via a web page or a client program installed on the end-user device 115

The system 100 also includes at least one document 120 that the service member would like to take a snapshot of. The document 120 is a bill, a bank statement, medical analysis or the like.

FIG. 2 illustrates a block diagram of an exemplary computing device 200 according to an embodiment of the present invention. The computing device 200 is able to be used to acquire, cache, store, compute, search, transfer, communicate and/or display information. The server(s) in the cloud 110 and/or the end-user device 115 of the FIG. 1 can be similarly configured as the computing device 200.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card, RAM, ROM, EPROM, EEPROM or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Application(s) 214, such as the client program or one or more server side applications implementing the service discussed above, are likely to be stored in the storage device 212 and memory 204 and are processed by the processor 206. More or less components shown in Figure 2 are able to be included in the computing device 200. In some embodiments, the computing device 200 includes hardware modules 214, such as a camera. The camera can be used to take snapshots of documents. Typically, the photos are stored in a camera roll on the computing device 200.

The computing device 200 can be a server or an end-user device. Exemplary end-user devices include, but are not limited to, a tablet, a mobile phone, a smart phone, a desktop computer, a laptop computer, a netbook, or any suitable computing device such as special purpose devices, including set top boxes and automobile consoles.

In some embodiments, the client program installed on the end-user device 115 provides a routine that tags photos of documents for classification. Alternatively, the routine is separate from but is accessed by the client program. In some embodiments, the routine is a light process running on the end-user device 115.

Typically, classification is done by pattern matching rather than by inspection, such as deep OCR (optical character recognition) processing, to respect user privacy. Put differently, the classification does not use content of the document but instead uses its graphical structure. For example, bills from Mobile Carrier X include the same logo, the same color scheme and the same disposition. Only few things change, such as dates and numbers, between two monthly bills issued by Mobile Carrier X. As such, the routine extracts a pattern from and applies matching on every photo added to the end-user device to detect if it is of a document and if it can be classified or tagged with an existing template. Unlike photos using prior art solutions, the photos are not deeply analyzed to ensure user privacy.

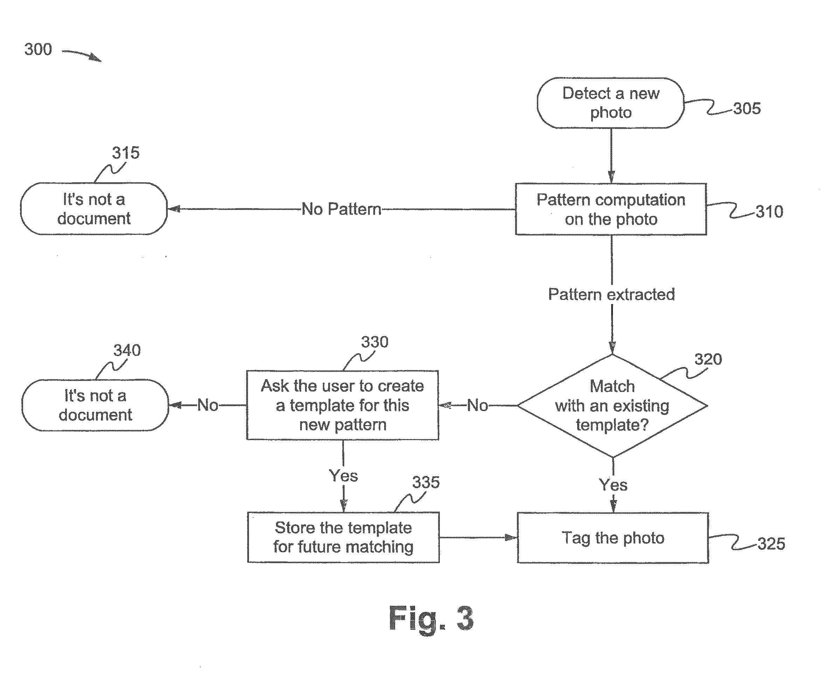

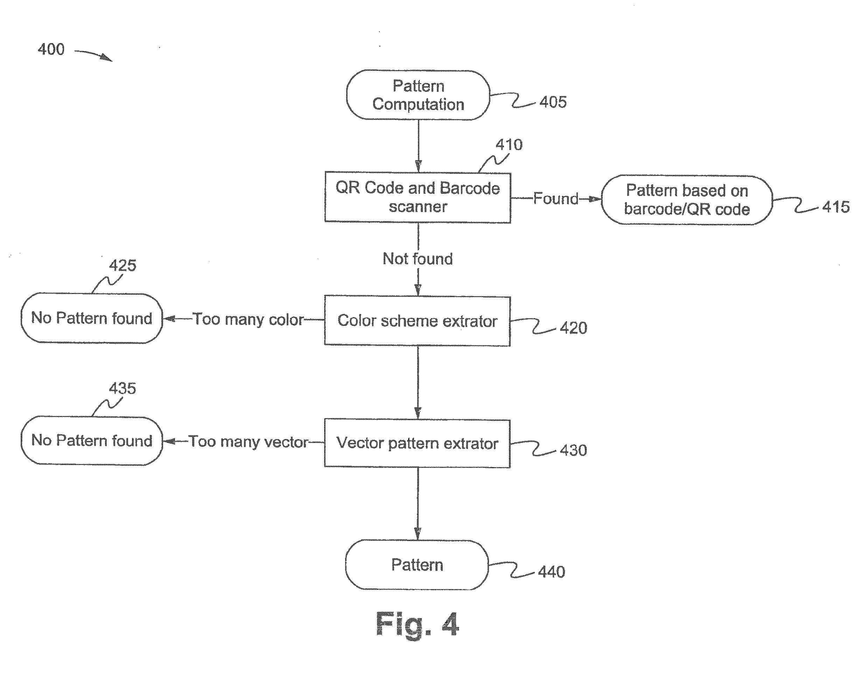

FIG. 3 illustrates an exemplary flow diagram 300 of document tagging according to an embodiment of the present invention. When a new photo on the end-user device is detected (Step 305), a pattern computation is performed on the photo (Step 310). The Step 310 is further discussed in FIG. 4. If no pattern is found based on the computation, then the new photo is not of a document (Step 315). However, if a pattern is found based on the computation, then the pattern is extracted from the photo. The pattern is compared with all existing templates to determine whether there is a match (Step 320). If a match is found, then the photo is tagged (Step 325). If no match is found, then the user is asked to create a template for this new pattern (Step 330). Typically, the user is able to link this new template with one or more tags. If the user wishes to create a template for this new pattern, then this new template is stored on the end-user device for use in future matching (Step 335). If the user does not wish to create a template for this new pattern, then the photo is not of a document (Step 340).

In some embodiments, the pattern computation includes two different computations. The first computation is based on code identification. If no code is identified from the first computation, then the second computation is performed. The second computation is based on a color schema detection and vector extraction. Color schema detection and vector extraction complement each other. Color scheme detection is used in conjunction with vector detection to enhance pattern recognition. In some embodiments, the second computation is not performed if a code is identified from the first computation.

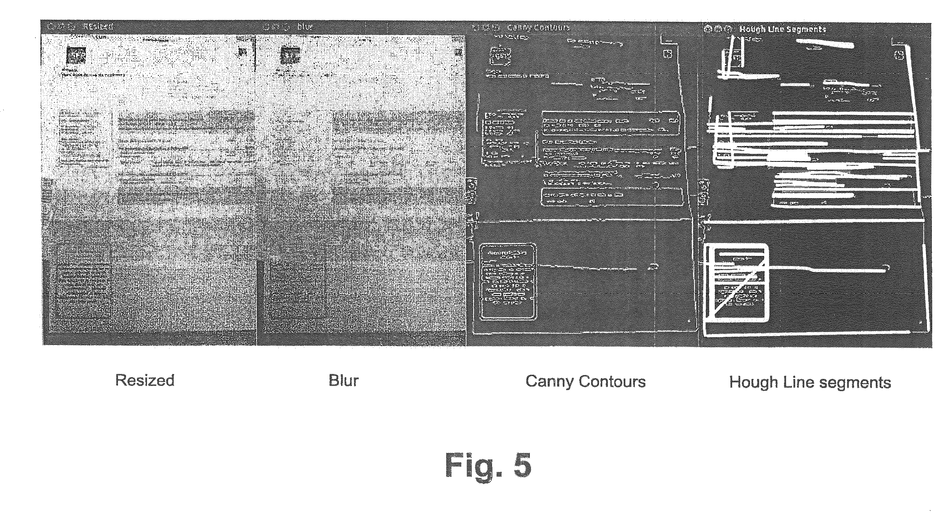

FIG. 4 illustrates an exemplary flow diagram 400 of pattern extraction according to an embodiment of the present invention. A pattern computation is performed on a photo (Step 405). A code scanner is used on the photo (Step 410). The code scanner is able to detect if the photo includes any one-dimensional or two-dimensional codes. Exemplary codes are QR codes and barcodes. If a code is found by the code scanner, then the pattern is based on the detected code (Step 415). If no code is found by the code scanner, then a color scheme extractor is used on the photo (Step 420). If a total number of colors extracted from the photo exceeds a color threshold, then no pattern is found (Step 425). Typically, a photo with too many colors indicate that it is of a picture, not of a document. If the total number of colors extracted from the photo does not exceed the color threshold, then a vector pattern extractor is used on the photo (Step 430). The Step 430 is further discussed in FIG. 5. If the total number of vectors extracted from the photo exceeds a vector threshold, then no pattern is found (Step 435). Similarly, a photo with too many vectors indicate that it is of a picture, not of a document. If the total number of vectors extracted from the photo does not exceed the vector threshold, then the extracted vectors are used as the pattern (Step 440).

FIG. 5 illustrates an exemplary graphical process 500 of the vector pattern extractor according to an embodiment of the present invention. In some embodiments, the vector pattern extractor first resizes the photo and blurs the resized photo to suppress content in the photo. The vector pattern extractor detects canny contours in the blurred photo and extracts line segments from the canny contours. In FIG. 5, the line segments are shown in thicker lines. If the total number of line segments or vectors in the photo is above the vector threshold, then no pattern is found. Otherwise, the vectors in the photo are used as the pattern.

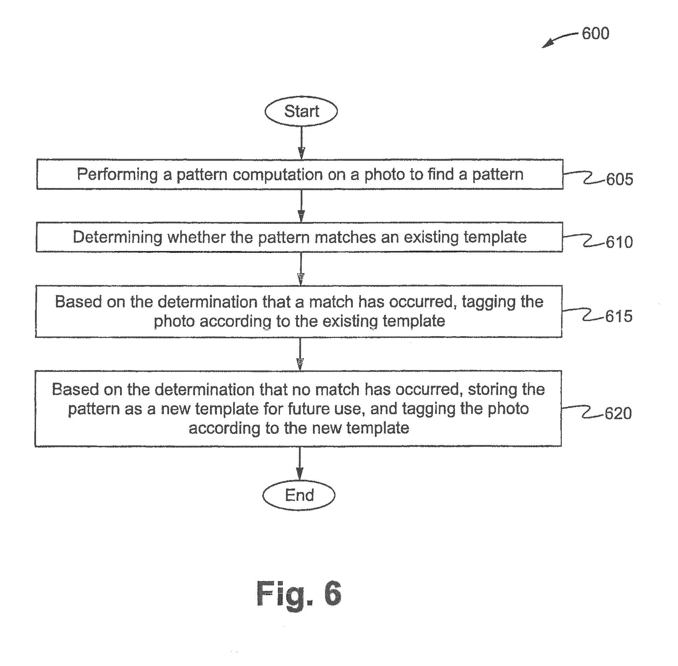

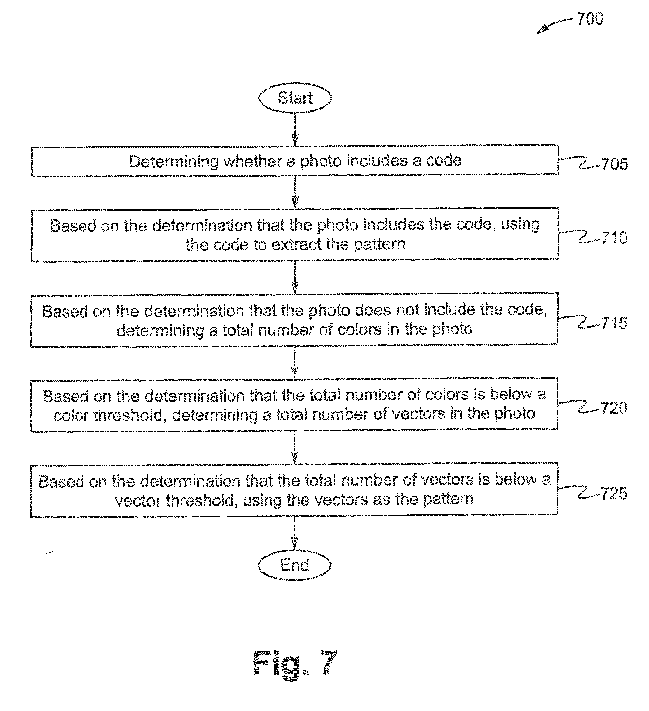

FIG. 6 illustrates an exemplary method 600 of document tagging by pattern matching according to an embodiment of the present invention. The method 600 is implemented on the end-user device. At Step 605, a pattern computation is performed on a photo to find a pattern. In some embodiments, the photo is detected as a new photo on the end-user device. Pattern computation is discussed in FIG. 7.

FIG. 7 illustrates an exemplary method 700 of pattern computation according to an embodiment of the present invention. At Step 705, it is determined whether the photo includes a code. Based on the determination that the photo includes the code, at Step 710, the code is used to extract the pattern. Based on the determination that the photo does not include the code, at Step 715, a total number of colors in the photo is determined. Based on the determination that the total number of colors is below a color threshold, at Step 720, a total number of vectors in the photo is determined. In some embodiments, the total number of vectors in the photo is determined by resizing the photo, blurring the resized photo, detecting canny contours in the blurred photo and extracting line segments from the canny contours. In some embodiments, the line segments are extracted by using the Hough transform or other similar techniques. Based on the determination that the total number of vectors is below a vector threshold, at Step 725, the vectors are used as the pattern.

Referring back to FIG. 6, at Step 610, it is determined whether the pattern from the Step 605 matches an existing template. Based on the determination that a match has occurred, at Step 615, the photo is tagged according to the existing template. However, in some embodiments, prior to the Step 615, user confirmation that the photo to be tagged according to the existing template is received. Based on the determination that no match has occurred, at Step 620, the pattern is stored as a new template for future use and the photo is tagged according to the new template. In some embodiments, the tagged photo is stored at a remote location, such as in the repositories of FIG. 1.

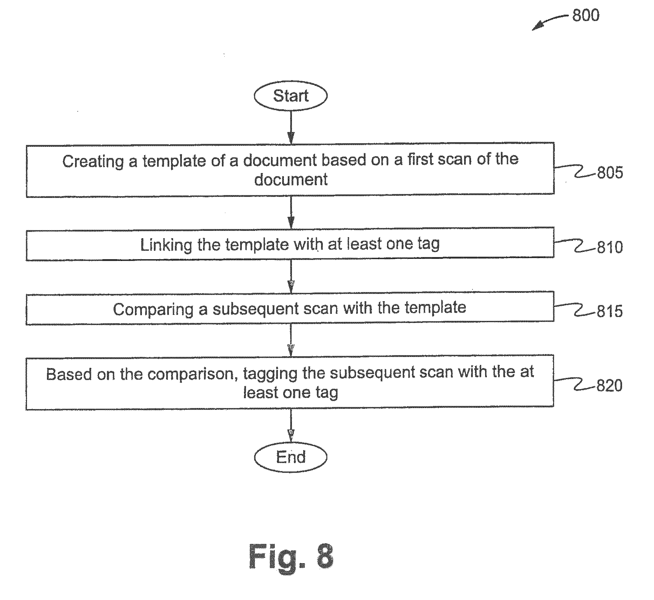

FIG. 8 illustrates another exemplary method 800 of document tagging by pattern matching according to an embodiment of the present invention. The method 600 is implemented on the end-user device. At Step 805, a template of a document based on a first scan of the document is created. In some embodiments, the template is added to a collection of templates stored on the end-user device. At Step 810, the template is linked with at least one tag. At Step 815, a subsequent scan is compared with the template. Based on the comparison, at Step 820, the subsequent scan is tagged with the at least one tag. In some embodiments, the tagged scan is transmitted to a remote location, such as in the repositories of FIG. 1, to be backed up.

The user is able to perform a remote search against tags by using at least one key word in the search and, thereafter, receives from the remote location photos in response to the remote search. Typically, the photos received from the remote location are of the same classification since these photos are similarly tagged.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A non-transitory computer-readable medium storing instructions that, when executed by a computing device, cause the computing device to perform a method, the method comprising:
performing a pattern computation on a photo to find a pattern;
determining whether the pattern matches an existing template;
based on the determination that a match has occurred, tagging the photo according to the existing template; and
based on the determination that no match has occurred, storing the pattern as a new template for future use, and tagging the photo according to the new template.

2. The non-transitory computer-readable medium of Claim 1, wherein performing a pattern computation on a photo includes:
determining whether the photo includes a code;
based on the determination that the photo includes the code, using the code to extract the pattern;
based on the determination that the photo does not include the code, determining a total number of colors in the photo;
based on the determination that the amount of colors is below a color threshold, determining a total number of vectors in the photo; and
based on the determination that the amount of vectors is below a vector threshold, using the vectors as the pattern.

3. The non-transitory computer-readable medium of Claim 2, wherein the code is an one-dimensional code or a two-dimensional code.

4. The non-transitory computer-readable medium of Claim 2, wherein the code is a QR code or is a barcode.

5. The non-transitory computer-readable medium of Claim 2, wherein determining a total number of vectors comprises:
resizing the photo;
blurring the resized photo;
detecting canny contours in the blurred photo; and
extracting line segments from the canny contours.

6. The non-transitory computer-readable medium of Claim 5, wherein the line segments are extracted by using the Hough transform.

7. The non-transitory computer-readable medium of Claim 1, wherein the method further includes, prior to performing a pattern computation, detecting the photo as a new photo on the computing device.

8. The non-transitory computer-readable medium of Claim 1, wherein the method further includes, prior to tagging the photo according to the existing template, receiving user confirmation that the photo is to be tagged according to the existing template.

9. The non-transitory computer-readable medium of Claim 1, wherein the method further includes storing the tagged photo at a remote location.

10. The non-transitory computer-readable medium of Claim1, wherein method further includes:
creating a template of a document based on a first scan of the document;
linking the template with at least one tag;
comparing a subsequent scan with the template; and
based on the comparison, tagging the subsequent scan with the at least one tag.

11. The non-transitory computer-readable medium of Claim 10, wherein the method further comprises, prior to comparing a subsequent scan, adding the template to a collection of templates stored on the computing device.

12. The non-transitory computer-readable medium of Claim 10, wherein the method further comprises, after tagging the subsequent scan:
transmitting the tagged scan to a remote location to be backed up;
performing a remote search against tags by using at least one key word; and
receiving from the remote location photos in response to the remote search.

13. A system comprising:
a network;
a server coupled with the network, the server backing up user data; and
an end-user device including:
a camera;
a memory; and
an application stored in the memory, the application configured to:
detect a new snapshot taken by the camera;
determine whether the snapshot is of a document; and
based on the determination that the snapshot is of a document, visually identifying the snapshot for classification.

14. The system of Claim 13, wherein the visual identification is independent of text recognition.

15. The system of Claim 13, wherein the application is also configured to tag the snapshot based on the visual identification and to transmitted the tagged snapshot to the server, and wherein the tag classifies the tagged snapshot that is stored by the server.
